**Europäisches Patentamt**

(19) **European Patent Office**

**Office européen des brevets**

(11) Publication number: **0 185 804**
**B1**

(12) # EUROPEAN PATENT SPECIFICATION

(45) Date of publication of patent specification: **23.11.89**

(21) Application number: **84201950.7**

(22) Date of filing: **28.12.84**

(51) Int. Cl.⁴: **G 01 K 1/14, G 01 K 1/08**

(54) Tubular element instrumented with temperature sensors, in particular for measuring overtemperatures in the tubes of thermoelectric power plant superheaters.

(43) Date of publication of application:
**02.07.86 Bulletin 86/27**

(45) Publication of the grant of the patent:
**23.11.89 Bulletin 89/47**

(84) Designated Contracting States:
**AT BE CH DE FR GB LI LU NL SE**

(56) References cited:
**FR-A-1 409 535**
**GB-A- 671 734**
**GB-A- 909 187**
**US-A-3 212 178**
**US-A-4 023 411**

(73) Proprietor: **CISE- Centro Informazioni Studi Esperienze S.p.A.**
**Via Carducci, 14**
**I-20123 Milano (IT)**

(72) Inventor: **Arisi, Sergio**
**Viale Lombardia 32**
**I-20131 Milano (IT)**
Inventor: **Parmeggiani, Aldo**
**Via G.A. Am Deo 46**
**I-20133 Milano (IT)**

(74) Representative: **Appoloni, Romano et al**
**Ing. Barzanò & Zanardo S.p.A. Via Borgonuovo 10**
**I-20121 Milano (IT)**

Courier Press, Leamington Spa, England.

## Description

This invention relates to a pipe assembly with temperature sensor, in particular for measuring overtemperatures in the tube of thermoelectric power plant superheaters.

Measuring the wall temperatures of the constituent tubes of a superheater is known to be of particular importance, as said tubes are subjected to large temperature gradients, to aggressive products of combustion, and to high temperatures. This measurement is currently made using commercial thermocouples mounted on the tube surfaces and/or suitably supported on the outside of the tubes. The aforesaid chemical and physical conditions enable thermocouples mounted in this manner to operate correctly only for periods of a few weeks, such periods being unacceptable and of little significance in the effective control of the plant.

There are currently no superheaters which are instrumented or provided with protective systems and alarms which make it possible to act in order to save the tube bundle, in particular during the temperature transients at plant start-up.

A pipe assembly is known (GB—A—909 187) which incorporates one thermosensitive member housed in a longitudinal groove formed in the pipe assembly. Such pipe assembly is structured in order to measure the temperature of a material in a vessel and cannot be used for the aforesaid measurement of temperature in a superheater.

A process is known (US—A—3 212 178) for inserting a temperature measuring device in the fuel core of a sheated nuclear reactor fule plate; this technique, however, cannot be used for incorporating thermosensitive members in the tubes of a superheater for the measurement of the temperature of the tubes.

The object of the present invention is to provide a pipe assembly for making local measurements of the tube wall temperatures to enable any exceeding of the temperature limits tolerable by the superheater to be immediately checked.

This object is attained by a pipe assembly incorporating at least one thermosensitive member housed in a longitudinal groove formed in the pipe assembly, characterized by comprising an inner thermoconductive tube and an outer thermoconductive tube concentric with the inner tube, the tubes being locked together such that the outer surface of the inner tube is in tight thermal contact with the inner surface of the outer tube, at least one longitudinal groove being formed in at least one of said surfaces in order to form with the other of said surfaces a circumferentially closed longitudinal passage in which said thermosensitive member is inserted, said thermosensitive member sensing the temperature of the pipe assembly at said longitudinal passage.

The characteristics and advantages of a pipe assembly constructed in accordance with the present invention will be more apparent from the description given hereinafter with reference to the accompanying diagrammatic drawings in which:

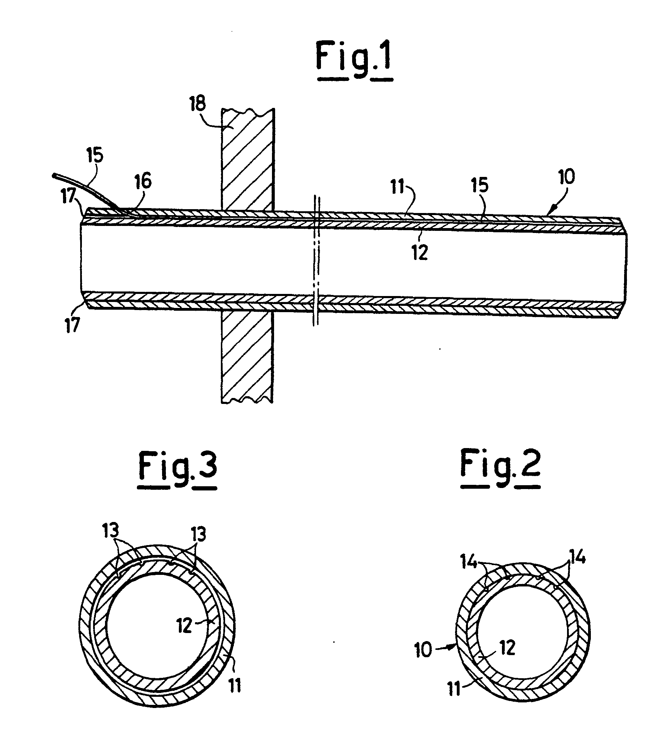

Figure 1 is a partly broken longitudinal section through a pipe assembly according to the invention;

Figure 2 is a cross-section through the pipe assembly of Figure 1; and

Figure 3 is a cross-section equivalent to that of Figure 2, before undergoing a drawing process.

With reference to the drawings, a pipe assembly according to the invention indicated by 10 comprises a first tube 11 into which a second tube 12 is concentrically inserted with a gap of a few tenths of millimetre.

A series of longitudinal grooves 13 are formed in the outer surface of the second tube 12, and have a cross-section of essentially circular profile, obtained for example by milling followed by smoothing or polishing.

The two tubes 11 and 12, inserted one into the other, are subjected to mechanical cold-drawing, effected with an internal mandrel, which forces the two said tubes together to create positioning seats 14 for thermocouples 15.

In the vicinity of an end portion 17 of said pipe assembly 10 constituted in this manner there are provided smoothly joined arcuate bores or seats 16 which connect the seats 14 to the outside of the pipe assembly to enable the thermocouples 15 to be connected to measuring systems (not shown). An end portion 17 of the pipe assembly 10 which is free from thermocouples 15 enables it to be assembled by welding, with the thermocouples 15 already inserted, these latter undergoing no danger of damage and emerging into a zone which is not exposed to the aggressive fluids, and lies beyond a wall 18.

The drawing process carried out with an internal mandrel provides for a tube diameter reduction of 5—10% and a simultaneous analogous thickness reduction so that the two tubes remain strongly forced together to provide good thermal contact. Before being drawn, the contacting surfaces undergo chemical pickling treatment and the surfaces which slide in the drawbench undergo bonderizing. The state of tension induced by the drawing operation, together with the pressure of the process fluid inside the pipe assembly, oppose any separation of the two tubes caused by differential expansion in the presence of temperature gradients. In particular, for equal total thickness (i.e. the sum of the two), it is convenient to thin-down the tube exposed to the fluid of higher pressure.

Furthermore, in order to improve thermal contact between the two tubes inserted one into the other, a series of longitudinal welds can be provided in suitable number, made for example by means of an electron beam or a similar method.

The grooves which create positioning seats for the thermocouples can be provided in the inner surface of the first tube 11.

## Claims

1. A pipe assembly incorporating at least one thermosensitive member (15) housed in a longitudinal groove (13) formed in the pipe assembly, characterized by comprising an inner thermoconductive tube (12) and an outer thermoconductive tube (11) concentric with the inner tube (12), the tubes (11, 12) being locked together such that the outer surface of the inner tube (12) is in tight thermal contact with the inner surface of the outer tube (11), at least one longitudinal groove (13) being formed in at least one of said surfaces in order to form with the other of said surfaces a circumferentially closed longitudinal passage in which said thermosensitive member (15) is inserted, said thermosensitive member (15) sensing the temperature of the pipe assembly at said longitudinal passage.

2. A pipe assembly as claimed in claim 1, characterised in that said locking is effected by drawing.

3. A pipe assembly as claimed in claim 1, characterised in that said grooves (13) are provided in the outer surface of the inner tube (12).

4. A pipe assembly as claimed in claim 1, characterised in that said grooves (13) are provided in the inner surface of the outer tube (11).

5. A pipe assembly as claimed in claim 1, characterised in that said grooves (13) are connected, in proximity to at least one end of said pipe assembly, to the outside of said pipe assembly by means of smoothly joined arcuate bores (16).

6. A pipe assembly as claimed in claim 1, characterised in that a series of longitudinal welds are provided on the surface of said concentric tubes (11, 12) in order to improve thermal contact between said tubes (11, 12).

**Patentansprüche**

1. Rohranordnung mit wenigstens einem wärmeempfindlichen Element (15), welches in einer in der Rohranordnung ausgebildeten Längsnut (13) aufgenommen ist, dadurch gekennzeichnet, daß die Anordnung ein inneres wärmeleitendes Rohr (12) und ein zum inneren Rohr (12) konzentrisches, äußeres wärmeleitendes Rohr (11) umfaßt, daß die Rohre (11, 12) derart miteinander verbunden sind, daß die Außenfläche des inneren Rohres (12) in engem thermischem Kontakt mit der Innenfläche des äußeren Rohres (11) steht, und daß wenigstens eine Längsnut (13) in wenigstens einer der Oberflächen ausgebildet ist, um mit der anderen der Oberflächen eine in Umfangsrichtung geschlossene Längsöffnung zu bilden, in welche das wärmeempfindliche Element (15) eingeführt wird, wobei das wärmeempfindliche Element (15) die Temperatur der Rohranordnung an der Längsöffnung aufnimmt.

2. Rohranordnung nach Anspruch 1, dadurch gekennzeichnet, daß die Verbindung durch ein Ziehen erfolgt.

3. Rohranordnung nach Anspruch 1, dadurch gekennzeichnet, daß die Nuten (13) in der Außenfläche des Innenrohres (12) vorgesehen sind.

4. Rohranordnung nach Anspruch 1, dadurch gekennzeichnet, daß die Nuten (13) an der Innenfläche des Außenrohres (11) vorgesehen sind.

5. Rohranordnung nach Anspruch 1, dadurch gekennzeichnet, daß die Nuten (13) nahe wenigstens einem Ende der Rohranordnung mit der Außenseite der Rohranordnung mittels glatt anschließender gekrümmter Bohrungen (16) verbunden sind.

6. Rohranordnung nach Anspruch 1, dadurch gekennzeichnet, daß eine Serie von Längsschweißstellen an den Flächen der konzentrischen Rohre (11, 12) zur Verbesserung des thermischen Kontaktes zwischen den Rohren vorgesehen ist.

**Revendications**

1. Elément tubulaire comprenant au moins un élément thermo-sensible (15) logé dans une rainure longitudinale (13) formée dans l'élément tubulaire, caractérisé en ce qu'il comprend un tube thermo-conducteur intérieur (12) et un tube thermo-conducteur extérieur (11) concentrique au tube intérieur (12), les tubes (11, 12) étant emboîtés de telle sorte que la face externe du tube intérieur (12) soit en contact thermique étroit avec la face interne du tube extérieur (11), au moins une rainure longitudinale (13) étant formée dans au moins une desdites faces afin de former avec l'autre desdites faces un passage longitudinal fermé sur sa circonférence dans lequel ledit élément thermo-sensible (15) est inséré, ledit élément thermo-sensible (15) captant la température de l'élément tubulaire dans ledit passage longitudinal.

2. Elément tubulaire selon la revendication 1, caractérisé en ce que l'emboîtement se fait par étirement.

3. Elément tubulaire selon la revendication 1, caractérisé en ce que lesdites rainures (13) sont prévues dans la face externe du tube intérieur (12).

4. Elément tubulaire selon la revendication 1, caractérisé en ce que lesdites rainures (13) sont prévues sur la face interne du tube extérieur (11).

5. Elément tubulaire selon la revendication 1, caractérisé en ce que lesdites rainures (13) sont reliées, à proximité de l'une au moins des extrémités dudit élément tubulaire, avec l'extérieur dudit élément tubulaire au moyen de trous de forme courbe à raccord lisse (16).

6. Elément tubulaire selon la revendication 1, caractérisé en ce qu'une série de soudures longitudinales est prévue sur la surface desdits tubes concentriques (11, 12) pour améliorer le contact thermique entre lesdits tubes (11, 12).

Fig.1

Fig.3

Fig.2